# EUROPÄISCHE PATENTSCHRIFT

(11) **EP 1 672 137 B1**
(45) Veröffentlichungstag und Bekanntmachung des Hinweises auf die Patenterteilung: **17.08.2011**
(21) Anmeldenummer: 05019178.2
(22) Anmeldetag: 03.09.2005
(51) Int. Cl.: E04F 11/18

(54) **Gelenkverbinder für Röhre**
Articulation coupling member for tubes
Élément de connexion à joint articulé pour tuyaux

(30) Priorität: 16.12.2004 DE 202004019403 U
(43) Veröffentlichungstag der Anmeldung: 21.06.2006
(73) Patentinhaber: Flexo-Vertriebs-GmbH, 86356 Neusäss (DE)
(72) Erfinder: Schmid, Siegfried, 86356 Neusäss (DE)
(74) Vertreter: Schwarz, Thomas

(56) Entgegenhaltungen:
- DE-B- 1 272 641
- DE-U1- 29 509 140
- FR-A- 1 276 271
- US-A- 1 663 203

## Beschreibung

Die Erfindung betrifft einen Gelenkverbinder für Rohre, insbesondere Handläufe, nach dem Oberbegriff des Anspruchs 1.

Ein aus der DE 295 09 140 U1 bekannter Gelenkverbinder zur Verbindung zweier Handlaufteile enthält zwei halbkugelförmige Verbinderhälften, die relativ zueinander drehbar sind und jeweils einen mit einem Außengewinde versehenen Verbindungsstift zum Anschluss eines Handlaufteils aufweisen. Die Verbindungsstifte sind an ihren innerhalb der Verbinderhälften befindlichen Enden abgeflacht und durch eine Drehachse gelenkig miteinander verbunden. Durch ein derartiges Gelenkelement können Handlaufteile in unterschiedlichen Winkeln miteinander verbunden und damit an die unterschiedlichen Treppenverläufe angepasst werden. Bei diesem Gelenkverbinder ist jedoch eine Trennfuge zwischen den Verbinderhälften vorhanden, die auch nach der Montage sichtbar bleibt.

Es sind auch bereits Gelenkverbinder bekannt, die einen kugelförmigen Grundkörper mit entsprechenden Öffnungen zur Aufnahme zweier gelenkig miteinander verbundener stiftförmiger Anschlusselemente aufweisen. Dort sind die im Grundkörper befindlichen Enden über einen Gelenkstift verbunden, der von der Außenseite des Grundkörpers eingesetzt wird. Auch hier ist der Gelenkstift bzw. die hierfür vorgesehene Bohrung im montierten Zustand von außen sichtbar.

Aufgabe der Erfindung ist es, einen Gelenkverbinder der eingangs genannten Art zu schaffen, der einfach und kostengünstig herstellbar ist und nach der Montage keine sichtbaren Bohrungen oder Trennflächen aufweist.

Diese Aufgabe wird durch einen Gelenkverbinder mit den Merkmalen des Anspruchs 1 gelöst. Zweckmäßige Ausgestaltungen und vorteilhafte Weiterbildungen der Erfindung sind Gegenstand der Unteransprüche.

Der erfindungsgemäße Gelenkverbinder kann besonders einfach hergestellt und montiert werden. Der Grundkörper muss nur entsprechende Löcher aufweisen, in denen die Befestigungselemente einfach montierbar sind. Das verstellbare Befestigungselement kann zusammen mit der Einsatzhülse relativ einfach vormontiert und mit dieser in das entsprechende Loch des Grundkörpers eingesetzt werden. Das verstellbare Befestigungselement ist gegen Verdrehen gesichert, so dass an diesem ohne Probleme ein Anschlussteil befestigt werden kann. Durch derartige Gelenkverbinder können einzelne Handlaufteile eines Handlaufs mit unterschiedlichen Winkeln zueinander auf besonders einfache Weise miteinander verbunden werden. So sind z.B. Eckverbindungen oder beliebige Anschlüsse eines aus rohr- oder stabförmigen Handlaufelementen zusammengesetzten Wandhandlaufs schnell und einfach herstellbar.

In einer besonders zweckmäßigen Ausführung ist das schwenkbare Befestigungselement über einen in eine Axialnut der Einsatzhülse eingreifenden radialen Stift gegen Verdrehung gesichert. Es können auch andere geeignete Verdrehsicherungen vorgesehen sein. So kann das schwenkbare Befestigungselement an seinem im Grundkörper angeordneten Ende seitlich abgeflacht und in einer rechteckigen Vertiefung am Boden des Sacklochs angeordnet sein.

Die Einsatzhülse kann unterschiedlich ausgeführt sein. Sie kann z.B. in das Sackloch des Grundkörpers eingepresst, eingeschraubt oder eingeklebt sein. Dadurch wird eine besonders einfache Herstellung ermöglicht.

Der Grundkörper kann aus Holz, Metall, Stein, Kunststein, Kunststoff oder dgl. gefertigt sein. Die Befestigungselemente bestehen zweckmäßigerweise aus Metall. Auch diese können jedoch bei Bedarf aus Kunststoff hergestellt sein.

Weitere Besonderheiten und Vorzüge der Erfindung ergeben sich aus der folgenden Beschreibung von Ausführungsbeispielen anhand der Zeichnung. Es zeigen:
- **Figur 1**: einen erfindungsgemäßen Gelenkverbinder im Querschnitt;
- **Figur 2**: einen weiteren Gelenkverbinder mit unterschiedlichen Einsatzbuchsen;
- **Figur 3**: einen weiteren Gelenkverbinder im Querschnitt und
- **Figur 4**: eine Schnittansicht entlang der Linie A-B von Figur 3.

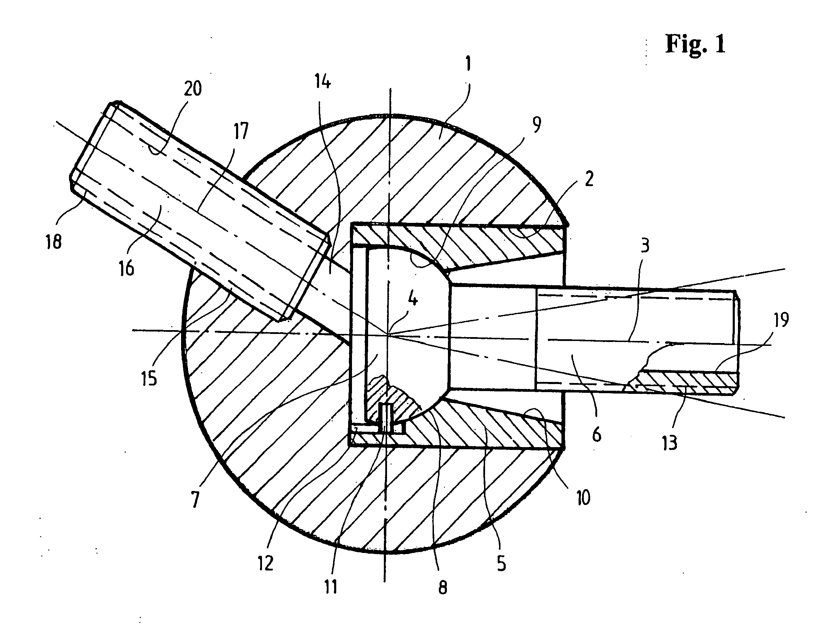

Der in Figur 1 im Querschnitt dargestellte Gelenkverbinder enthält einen kugelförmigen Grundkörper 1 mit einem Sackloch 2, dessen Mittelachse 3 durch den Mittelpunkt 4 des Grundkörpers 1 verläuft. In dem Sackloch 2 ist eine Einsatzhülse 5 mit einem nach außen vorstehenden, stiftförmigen Befestigungselement 6 angeordnet. Das stiftförmige Befestigungselement 6 ist innerhalb des Grundkörpers 1 um dessen Mittelpunkt 4 schwenkbar angeordnet. Hierzu weist das stiftförmige Befestigungselement 6 an seinem im Grundkörper 1 angeordneten inneren Ende einen Kopf 7 mit einer kugelförmigen Anlagefläche 8 auf, die zur Anlage an einer in Form einer Kugelpfanne ausgebildeten inneren Gegenfläche 9 an einer inneren Stirnseite der Einsatzhülse 5 gelangt. Die an die Gegenfläche 9 anschließende Innenwand 10 der Einsatzhülse 5 ist konisch ausgebildet und nach außen hin erweitert, so dass das stiftförmige Befestigungselement 6 verschwenkt werden kann.

In den Kopf 7 des Befestigungselements 6 ist ein radialer Stift 11 eingesetzt, der in eine Axialnut 12 der Einsatzhülse 5 eingreift. Dadurch wird eine Verdrehsicherung des Befestigungselements 6 erreicht. An dem nach außen vorstehenden äußeren Ende des stiftförmigen Befestigungselements 6 ist ein Gewinde 13 zur Befestigung eines rohrförmigen Handlaufteils vorgesehen.

In dem Grundkörper 1 ist ferner unter einem vorgegebenen Winkel zum Sackloch 2 ein weiteres abgesetztes Loch 14 mit einem Innengewinde 15 zum Einschrauben eines zweiten stiftförmigen Befestigungselements 16 vorgesehen. Auch die Mittelachse 17 des zweiten Lochs 14 verläuft durch den Mittelpunkt 4 des Grundkörpers 1 und mündet bei der gezeigten Ausführung in das Sackloch 2. Das zweite Befestigungselement 16 weist ebenfalls ein Außengewinde 18 auf und dient zur Befestigung eines weiteren Handlaufteils, so dass durch den Gelenkverbinder eine Winkelverbindung zwischen zwei z.B. rohrförmigen Handlaufteilen hergestellt werden kann. Über das zweite Befestigungselement 16 kann der Grundkörper 1 z.B. auch an einer Wand befestigt werden, um einen Wandanschluss zu ermöglichen. Der hier gezeigte Winkel zwischen dem Sackloch 2 und dem zweiten Loch 14 stellt lediglich ein Ausführungsbeispiel dar. Es können auch andere Winkel oder mehrere Aufnahmebohrungen vorgesehen sein. Anstelle des zweiten Lochs kann in den Grundkörper 1 auch ein feststehender Befestigungsstift oder dgl. eingespritzt sein, wenn der Grundkörper 1 z.B. aus Kunststoff besteht. Der Grundkörper 1 kann aber auch aus Metall, Holz oder ähnlichen Materialien bestehen.

Bei dem in Figur 1 dargestellten Ausführungsbeispiel weisen sowohl das erste stiftförmige Befestigungselement 6 als auch das zweite stiftförmige Befestigungselement 16 durchgehende Bohrungen 19 bzw. 20 auf. Dadurch kann durch den Gelenkverbinder z.B. ein Stromversorgungskabel für eine Beleuchtung des Handlaufs oder dgl. geführt werden.

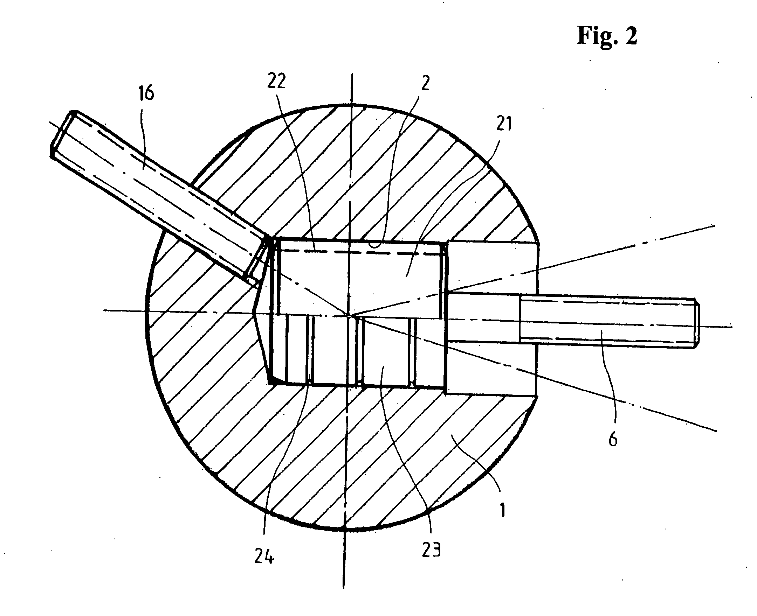

In Figur 1 weist die Einsatzhülse 5 eine glatte Außenfläche auf und ist in das Sackloch eingepresst sowie ggf. eingeklebt. In Figur 2 sind zwei weitere Ausführungsformen einer Einsatzhülse dargestellt. Die in der oberen Hälfte dargestellte Einsatzhülse 21 weist ein Außengewinde 22 auf und ist in ein entsprechendes Innengewinde des Sacklochs 2 eingeschraubt. Die in der unteren Hälfte von Figur 2 gezeigte Einsatzhülse 23 weist dagegen an ihrer Außenseite mehrere rillenförmige Vertiefungen 24 auf. Dadurch kann die Einsatzhülse 23 besser verklebt werden.

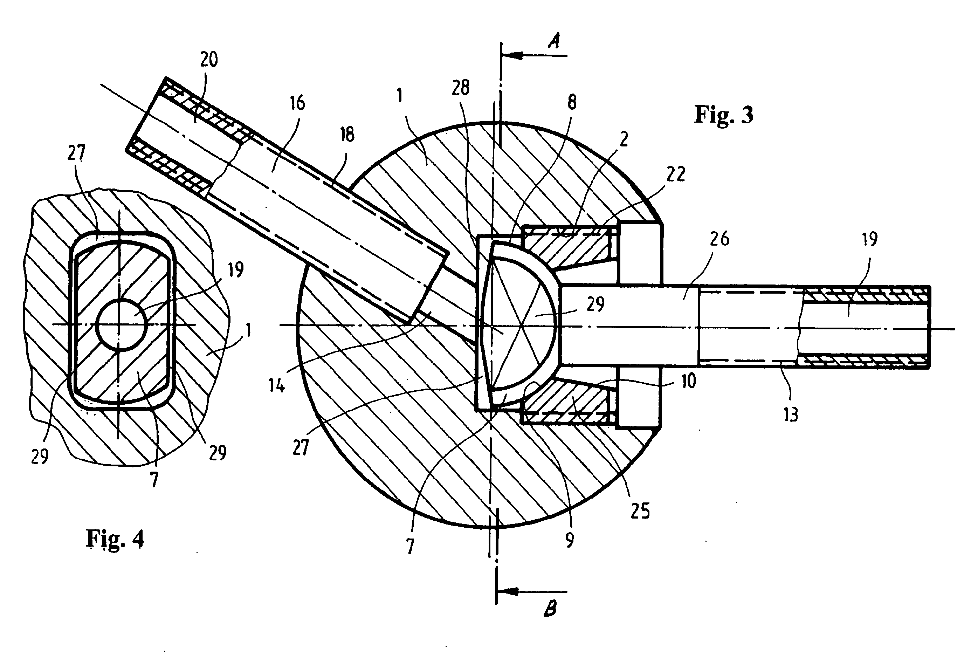

In Figur 3 ist ein weiteres Ausführungsbeispiel eines Gelenkverbinders gezeigt, der im Wesentlichen denselben Grundaufbau wie bei den Ausführungsformen der Figuren 1 und 2 aufweist. Einander entsprechende Bauteile sind daher auch mit denselben Bezugszeichen versehen sind. Der Gelenkverbinder von Figur 3 enthält ebenfalls einen kugelförmigen Grundkörper 1 mit einem Sackloch 2, in dem eine Einsatzhülse 25 und ein verschwenkbares stiftförmiges Befestigungselement 26 angeordnet sind. Auch hier weist der Grundkörper 1 ein in das Sackloch 2 mündendes weiteres Loch 14 mit einem darin angeordneten feststehenden Befestigungselement 16 auf. Die Einsatzhülse 25 enthält bei dieser Ausführung ein Außengewinde 22 und ist in ein entsprechendes Innengewinde des Sacklochs 2 eingeschraubt. Auch das hier verwendete verschwenkbare Befestigungselement 26 hat an seinem im Grundkörper 1 angeordneten inneren Ende einen Kopf 7 mit einer kugelförmigen Anlagefläche 8, die zur Anlage an einer in Form einer Kugelpfanne ausgebildeten inneren Gegenfläche 9 an einer inneren Stirnseite der Einsatzhülse 25 gelangt. Die Einsatzhülse 25 weist auch bei dieser Ausführung eine an Gegenfläche 9 anschließende konische, nach außen hin erweiterte Innenwand 10 auf. Sowohl das verschwenkbare Befestigungselement 26 als auch das feststehende Befestigungselement 16 weisen ein Außengewinde 13 bzw. 18 auf und sind zur Durchführung von Leitungen oder dgl. mit durchgehenden Bohrungen 19 bzw. 20 versehen.

Im Gegensatz zum Ausführungsbeispiel von Figur 1 ist der Kopf 7 des verschwenkbaren Befestigungselements 26 in der Ausführung von Figur 3 seitlich abgeflacht und in einer rechteckigen Vertiefung 27 am Boden der Sacklochs 2 angeordnet. Dadurch wird eine relativ einfache Verdrehsicherung erreicht. Zum einfacheren Verschwenken des Befestigungselements 26 weist dieses an seinem im Grundkörper 1 angeordneten Ende eine sphärische Stirnfläche 28 auf.

Wie besonders aus Figur 3 hervorgeht, enthält der Kopf 7 des Befestigungselements 26 zwei gegenüberliegende parallele Abflachungen 29, deren Abstand etwas geringer als die Breite der Vertiefung 27 ist. Dadurch kann das Befestigungselements 26 auch nach rechts und links verschwenkt werden.

## Patentansprüche

1. Gelenkverbinder für Rohre, insbesondere Handläufe, mit einem kugelförmigen Grundkörper (1) und mindestens einem im Grundkörper (1) schwenkbar angeordneten Befestigungselement (6), **dadurch gekennzeichnet, dass** das Befestigungselement (6; 26) innerhalb einer in einem Sackloch (2) des Grundkörpers (1) angeordneten Einsatzhülse (5; 21; 23; 25) um den Mittelpunkt des Grundkörpers (1) schwenkbar angeordnet und gegen Verdrehung gesichert ist.

2. Gelenkverbinder Anspruch 1, **dadurch gekennzeichnet, dass** das schwenkbare Befestigungselement (6) über einen in eine Axialnut (12) der Einsatzhülse (5; 21; 23) eingreifenden radialen Stift (11) gegen Verdrehung gesichert ist.

3. Gelenkverbinder Anspruch 1, **dadurch gekennzeichnet, dass** das schwenkbare Befestigungselement (26) an seinem in dem Grundkörper (1) angeordneten inneren Ende seitlich abgeflacht und zur Verdrehsicherung in einer rechteckigen Vertiefung (27) am Boden des Sacklochs (2) angeordnet ist.

4. Gelenkverbinder Anspruch 3, **dadurch gekennzeichnet, dass** das schwenkbare Befestigungselement (26) zwei gegenüberliegende parallele Abflachungen (29) enthält, deren Abstand etwas geringer als die Breite der Vertiefung (27) ist.

5. Gelenkverbinder Anspruch 3 oder 4, **dadurch gekennzeichnet, dass** das schwenkbare Befestigungselement (26) an seinem in dem Grundkörper (1) angeordneten inneren Ende eine sphärische Stirnfläche (28) aufweist.

6. Gelenkverbinder nach einem der Ansprüche 1 bis 5, **dadurch gekennzeichnet, dass** das schwenkbare Befestigungselement (6; 26) an seinem in dem Grundkörper (1) angeordneten inneren Ende einen Kopf (7) mit einer kugelförmigen Anlagefläche (8) zur Anlage an einer als Kugelpfanne ausgeführten Gegenfläche (9) in der Einsatzhülse (5; 21; 23; 25) aufweist.

7. Gelenkverbinder nach einem der Ansprüche Anspruch 1 bis 6, **dadurch gekennzeichnet, dass** die Einsatzhülse (5) in das Sackloch (2) des Grundkörpers (1) eingepresst ist.

8. Gelenkverbinder nach einem der Ansprüche Anspruch 1 bis 6, **dadurch gekennzeichnet, dass** die Einsatzhülse (21; 25) in das Sackloch (2) des Grundkörpers (1) eingeschraubt ist.

9. Gelenkverbinder nach einem der Ansprüche Anspruch 1 bis 6, **dadurch gekennzeichnet, dass** die Einsatzhülse (23) in das Sackloch (2) des Grundkörpers (1) eingeklebt ist.

10. Gelenkverbinder nach einem der Ansprüche 1 bis 9, **dadurch gekennzeichnet, dass** das schwenkbare Befestigungselement (6; 26) stiftförmig ausgebildet ist und an seinem aus dem Grundkörper vorstehenden äußeren Ende ein Gewinde (13) aufweist.

11. Gelenkverbinder nach einem der Ansprüche 1 bis 10, **dadurch gekennzeichnet, dass** in dem Grundkörper (1) ein in das Sackloch (2) mündendes weiteres Loch (14) für ein zweites Befestigungselement (16) vorgesehen ist.

12. Gelenkverbinder nach Anspruch 11, **dadurch gekennzeichnet, dass** das erste Befestigungselement (6) und das in dem weiteren Loch (14) angeordnete zweite Befestigungselement (16) durchgehende Bohrungen (19, 20) aufweisen.

13. Gelenkverbinder nach einem der Ansprüche 1 bis 12, **dadurch gekennzeichnet, dass** die Einsatzhülse (21; 25) ein Außengewinde (22) aufweist.

14. Gelenkverbinder nach einem der Ansprüche 1 bis 13, **dadurch gekennzeichnet, dass** die Einsatzhülse (23) an ihrer Außenseite Vertiefungen (24) oder Erhebungen zur sicheren Verankerung im Grundkörper (1) aufweist.

15. Gelenkverbinder nach einem der Ansprüche 1 bis 14, **dadurch gekennzeichnet, dass** der Grundkörper (1) aus Holz, Metall, Stein, Porzellan oder Kunststoff besteht.

## Claims

1. Articulated coupling member for tubes, in particular handrails, with a spherical base part (1) and at least one fastening element (6) arranged pivotably in the base part (1), **characterised in that** the fastening element (6; 26) is arranged inside an inserted sleeve (5; 21; 23; 25) arranged in a blind hole (2) of the base part (1) so as to be pivotable about the centre point of the base part (1) and secured against twisting.

2. Articulated coupling member according to claim 1, **characterised in that** the pivotable fastening element (6) is secured against twisting by means of a radial pin (11) engaging in an axial groove (12) of the inserted sleeve (5; 21; 23).

3. Articulated coupling member according to claim 1, **characterised in that** at its inner end arranged in the base part (1) the pivotable fastening element (26) is flattened laterally and is arranged in a rectangular recess (27) at the bottom of the blind hole (2) to secure it against twisting.

4. Articulated coupling member according to claim 3, **characterised in that** pivotable fastening element (26) comprises two facing parallel flats (29) the distance between which is slightly less than the width of the recess (27).

5. Articulated coupling member according to claim 3 or 4, **characterised in that** at its inner end arranged in the base part (1) the pivotable fastening element (26) exhibits a spherical end face (28).

6. Articulated coupling member according to one of claims 1 to 5, **characterised in that** at its inner end arranged in the base part (1) the pivotable fastening element (6; 26) exhibits a head (7) with a spherical bearing face (8) for bearing on an abutment face (9) in the form of a ball cup in the inserted sleeve (5; 21; 23; 25).

7. Articulated coupling member according to one of claims 1 to 6, **characterised in that** the inserted sleeve (5) is pressed into the blind hole (2) of the base part (1).

8. Articulated coupling member according to one of claims 1 to 6, **characterised in that** the inserted sleeve (21; 25) is screwed into the blind hole (2) of the base part (1).

9. Articulated coupling member according to one of claims 1 to 6, **characterised in that** the inserted sleeve (23) is glued into the blind hole (2) of the base part (1).

10. Articulated coupling member according to one of claims 1 to 9, **characterised in that** the pivotable fastening element (6; 26) is pin-shaped and at its outer end protruding from the base part it exhibits a thread (13).

11. Articulated coupling member according to one of claims 1 to 10, **characterised in that** a further hole (14) debouching into the blind hole (2) is provided in the base part (1) for a second fastening element (16).

12. Articulated coupling member according to claim 11, **characterised in that** the first fastening element (6) and the second fastening element (16) arranged in the further hole (14) exhibit through bores (19, 20).

13. Articulated coupling member according to one of claims 1 to 12, **characterised in that** the inserted sleeve (21; 25) exhibits an external thread (22).

14. Articulated coupling member according to one of claims 1 to 13, **characterised in that** on its outside the inserted sleeve (23) exhibits depressions (24) or projections for secure anchorage in the base part (1).

15. Articulated coupling member according to one of claims 1 to 14, **characterised in that** base part (1) is made of wood, metal, stone, porcelain or plastic.

## Revendications

1. Elément de connexion à joint articulé pour tuyaux, en particulier des mains courantes, comportant un corps de base sphérique (1) et au moins un élément de fixation (6) disposé de manière à pouvoir pivoter dans le corps de base (1), **caractérisé en ce que** l'élément de fixation (6 ; 26) est disposé de manière à pouvoir pivoter dans une douille de réduction (5 ; 21 ; 23 ; 25) disposée dans un trou borgne (2) du corps de base (1) autour du point central du corps de base (1) et est bloqué contre toute rotation.

2. Elément de connexion à joint articulé selon la revendication 1, **caractérisé en ce que** l'élément de fixation pouvant pivoter (6) est bloqué contre toute rotation par le biais d'une goupille (11) radiale s'engageant dans une rainure axiale (12) de la douille de réduction (5 ; 21 ; 23).

3. Elément de connexion à joint articulé selon la revendication 1, **caractérisé en ce que** l'élément de fixation (26) pouvant pivoter est aplati latéralement sur son extrémité intérieure disposée dans le corps de base (1) et est disposé pour le blocage contre toute rotation dans une cavité rectangulaire (27) sur le fond du trou borgne (2).

4. Elément de connexion à joint articulé selon la revendication 3, **caractérisé en ce que** l'élément de fixation (26) pouvant pivoter contient deux aplatissements (29) parallèles opposés, dont l'écartement est un peu plus petit que la largeur de la cavité (27).

5. Elément de connexion à joint articulé selon la revendication 3 ou 4, **caractérisé en ce que** l'élément de fixation (26) pouvant pivoter présente une surface frontale (28) sphérique sur son extrémité intérieure disposée dans le corps de base (1).

6. Elément de connexion à joint articulé selon l'une quelconque des revendications 1 à 5, **caractérisé en ce que** l'élément de fixation (6 ; 26) pouvant pivoter présente, sur son extrémité intérieure disposée dans le corps de base (1), une tête (7) dotée d'une surface d'appui sphérique (8) destinée à être appuyée sur une contre-surface (9) réalisée comme un coussinet sphérique dans la douille de réduction (5 ; 21 ; 23 ; 25).

7. Elément de connexion à joint articulé selon l'une quelconque des revendications 1 à 6, **caractérisé en ce que** la douille de réduction (5) est enfoncée dans le trou borgne (2) du corps de base (1).

8. Elément de connexion à joint articulé selon l'une quelconque des revendications 1 à 6, **caractérisé en ce que** la douille de réduction (21 ; 25) est vissée dans le trou borgne (2) du corps de base (1).

9. Elément de connexion à joint articulé selon l'une quelconque des revendications 1 à 6, **caractérisé en ce que** la douille de réduction (23) est collée dans le trou borgne (2) du corps de base (1).

10. Elément de connexion à joint articulé selon l'une quelconque des revendications 1 à 9, **caractérisé en ce que** l'élément de fixation pouvant pivoter (6 ; 26) est réalisé en forme de goupille et présente un filetage (13) sur son extrémité extérieure dépassant du corps de base.

11. Elément de connexion à joint articulé selon l'une quelconque des revendications 1 à 10, **caractérisé en ce qu'**un autre trou (14) débouchant dans le trou borgne (2) est prévu pour un second élément de fixation (16) dans le corps de base (1).

12. Elément de connexion à joint articulé selon la revendication 11, **caractérisé en ce que** le premier élément de fixation (6) et le second élément de fixation (16) disposé dans l'autre trou (14) présentent des perçages débouchants (19, 20).

13. Elément de connexion à joint articulé selon l'une quelconque des revendications 1 à 12, **caractérisé en ce que** la douille de réduction (21 ; 25) présente un filetage extérieur (22).

14. Elément de connexion à joint articulé selon l'une quelconque des revendications 1 à 13, **caractérisé en ce que** la douille de réduction (23) présente, sur son côté extérieur, des cavités (24) ou des élévations pour un ancrage sûr dans le corps de base (1).

15. Elément de connexion à joint articulé selon l'une quelconque des revendications 1 à 14, **caractérisé en ce que** le corps de base (1) se compose de bois, de métal, de pierre, de porcelaine ou de plastique.
